# EUROPEAN PATENT APPLICATION

(11) **EP 4 692 968 A1**
(43) Date of publication of application: **11.02.2026**
(21) Application number: 24193237.5
(22) Date of filing: 07.08.2024
(51) Int. Cl.: G05B 23/02

(54) **VIRTUAL SENSING AND CONDITION MONITORING FOR ELECTRO-MECHANICAL SYSTEMS**

(71) Applicant: Siemens Aktiengesellschaft, 80333 München (DE)
(72) Inventor: Erlwein, Matthias, 91330 Eggolsheim OT Weigelshofen (DE); Khalil, Mohamed, 81379 München (DE); Malik, Vincent, 80636 München (DE); Zacharias, Dominik, 90765 Fürth (DE)
(74) Representative: Siemens Patent Attorneys

(57) **Abstract**

A, preferably computer-implemented, method of providing a virtual measurement value of an electro-mechanical device (5), such as a motor, comprising: obtaining, preferably during operation of a frequency converter (1) powering the electro-mechanical device (5), a first parameter set from the frequency converter, expanding, by a frequency converter model, the first parameter set (20) into a second parameter set (21), wherein the second parameter set (21) comprises more parameters than the first parameter set (20), and determining the virtual measurement value by a simulation of the electro-mechanical device (5) based on the second parameter set (21).

## Description

### Technical Field

The present disclosure relates to a, preferably computer-implemented, method of providing a virtual measurement value of an electro-mechanical device, such as a motor. The disclosure further relates to a method of condition monitoring and/or fault prediction, of an electro-mechanical device, preferably of one or more components of the electro-mechanical device. The disclosure further relates to a method of generating, preferably calibrating, a frequency converter model comprising one or more parameters. The disclosure further relates to a computing device, preferably comprising a processor and a memory, for condition monitoring and/or fault prediction. The disclosure further relates to a system comprising a computing device. The disclosure further relates to a computer program.

### Background Art

Sudden motor faults have a significant impact on the productivity and availability of machinery during operation. As high as 70% of the motor faults occur in the windings, bearings, and rotors, and in many cases, their root cause can be attributed to elevated temperatures of internal components such as windings, rotors, and bearings. These types of faults can lead to motor overheating, reduced efficiency, and ultimately, motor failure, resulting in unscheduled downtime, lost productivity, and increased maintenance costs.

Monitoring machinery using external physical sensors is expensive, requires special hardware setup (mounting, cables, etc.), and in many cases requires operation interruptions. On the other hand, using thermal imaging to monitor motor performance can help identify any hotspots and take proactive measures to prevent further damage, yet it is an expensive setup to be continuously running and requires image post-processing to extract useful information.

An alternative approach is using virtual sensors; a real-time simulation-based temperature estimation of the internal components. The simulation models driving the virtual sensors are light-weight and can be deployed on edge devices. Virtual sensor solutions rely intensively on acquiring operation data from the control unit of the machinery to perform their assessment; it ingests operation signals during run-time, e.g. currents, voltages, rotation speed, torque, inductances, and electrical resistances of internal components. These parameters may be used to initialize the temperature estimation in the simulation.

International Patent Application publication WO2022263105A1 discloses simulation of electrical energy losses in an electro-mechanical machine in a spatially resolved manner by means of an electrical simulation model of the machine. Furthermore, a temperature distribution in the machine is continuously simulated by means of a thermal simulation model of the machine using the structural data and the simulated electrical energy losses. In accordance with the simulated temperature distribution, a temperature value is then determined for a component of the machine and output in order to monitor its temperature.

European Patent Application publication EP4333294A1 discloses a method of monitoring and/or controlling of an electro-mechanical device, such as an electrical motor and/or generator, comprising the steps of: determining a first probability distribution of a virtual measurement variable, e.g., temperature at a predetermined position, of the electro-mechanical device, determining a confidence level for a first value of the virtual measurement variable based on the first probability distribution, changing an operating mode of the electro-mechanical device based on the confidence level and/or displaying an indication on a display, the indication instructing a user to change the operating mode of the electro-mechanical device.

International Patent Application publication WO2024088674A1 discloses simulation of a plurality of temperature curves of an electro-mechanical machine in a spatially resolved manner by means of a first thermal simulation model that comprises a plurality of spatially resolved trial function.

### Summary of Invention

Drive systems may comprise a plurality of components, e.g. motors, and control units, delivered from various vendors. Different vendors offer custom interfaces through which the machinery's operation data could be retrieved to monitor its condition. This makes it challenging to offer a vendor-neutral condition monitoring solution, applicable not only to a specific vendor but also to third-party drive systems.

Typically, a physical sensor, e.g., a temperature sensor, is used to measure the required physical property, such as a temperature. Often the application of physical sensors is not possible (e.g., on rotating parts) or feasible (special application such as clean rooms where the motor is not easily accessible). In these cases, the monitoring is performed using virtual temperature sensors. As an input for the virtual sensor, the data from the drive system are used. It is thus an object to provide the required (input) parameters for the virtual sensors used with drive systems of different drives system types / vendors.

According to a first aspect the problem is solved by a, preferably computer-implemented, method of providing a virtual measurement value of an electro-mechanical device, such as a motor. The method comprising the step of obtaining, preferably during operation of a frequency converter powering the electro-mechanical device, a first parameter set from the frequency converter. The method further comprising the step of expanding, by a frequency converter model, the first parameter set into a second parameter set, wherein the second parameter set comprises more parameters than the first parameter set. The method further comprising the step of determining the virtual measurement value by a simulation of the electro-mechanical device based on the second parameter set.

According to a second aspect the problem is solved by a, preferably computer-implemented, method of condition monitoring and/or fault prediction, most preferably according to the first aspect, and further comprising the step of using the virtual measurement value for determining a condition of the electro-mechanical device and/or predicting a fault in of the electro-mechanical device.

According to a third aspect the problem is solved by a method of generating, preferably calibrating, a frequency converter model comprising one or more parameters. The method comprising the step of obtaining a first parameter set from a frequency converter. The method further comprising the step of expanding, using the frequency converter model, the first parameter set into a second parameter set. The method further comprising the step of inputting the second parameter set into a simulation (model) of the electro-mechanical device. The method further comprising the step of obtaining one or more virtual measurement values as a result of the simulation. The method further comprising the step of obtaining one or more actual measurement values from a sensor, e.g., mounted on the electro-mechanical device. The method further comprising the step of adapting one or more of the parameters of the frequency converter model based on a comparison between the virtual measurement values and the actual measurement values, preferably until a deviation between the actual and the virtual measurement values exceeds a predetermined threshold.

According to a fourth aspect the problem is solved by computing device, preferably comprising a processor and a memory, for condition monitoring and/or fault prediction operative to perform the method according to the first, second, and/or third aspect.

According to a fifth aspect the problem is solved by a system comprising a computing device according to the fourth aspect, a frequency converter, and/or an electro-mechanical device.

According to a fifth aspect the problem is solved by a computer program, e.g., stored on a non-transitory memory, comprising program code that when executed perform the method steps of the first, second, and/or third aspect.

Further embodiments are described in the dependent claims.

Independent of the grammatical term usage, individuals with male, female or other gender identities are included within the term.

### Brief Description of the Drawing

- Figure 1: shows a schematic illustration of a converter powering a drive system.
- Figure 2: shows a first parameter set and a second parameter set.
- Figure 3: shows an illustration of a drive system with virtual sensing capabilities.
- Figure 4: shows a flowchart for calibration of the frequency converter model and/or the simulation model of the electro-mechanical device.
- Figure 5: shows an illustration of the calibration phase and utilization phase of the frequency converter model and/or the simulation model in a drive system with virtual sensing capabilities.
- Figure 6 to 13: show exemplary embodiments.

### Description of Examples

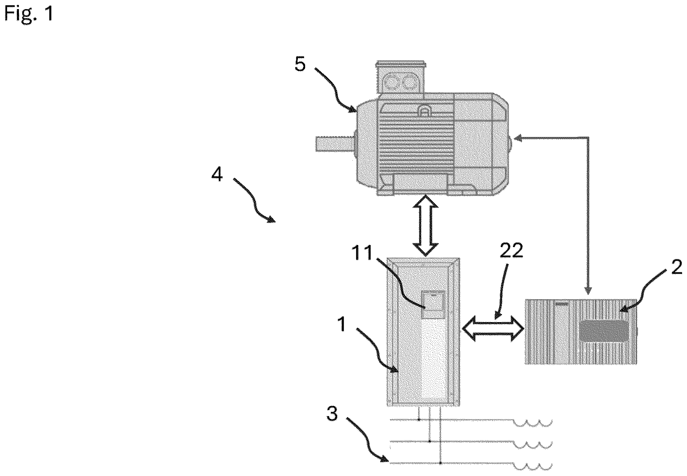

In Figure 1 an electric power converter 1, also denoted as converter in the following, of an electro-mechanical system 4, also denoted as drive system, is shown. The control of the drive system 4 may be performed by the converter 1 and a control unit 11 preferably integrated into the converter 1. To that end, the converter 1 and/or the control unit 11 may be part of a control loop and may comprise a processor and a memory to control the drive system 4. The converter 1 hence powers an electrical motor 5 of the drive system 4. The drive system 4 may thus comprise the converter 1, which is coupled to a, e.g., multi-phase, line voltage 3. The drive system 4 may thus further comprise the motor 5. A gearbox, not shown, may be coupled to the motor 5. The gearbox 6 may be coupled to a load, also not shown, e.g., for performing one or more process steps for controlling and/or affecting a process, e.g., in the production of a product and/or processing of a material. The control unit 11 of the converter 1 may control one or more insulated-gate bipolar transistors, IGBT, of a power block, which serve as electronic switches for providing electric energy to the motor 5. Alternatively, the motor 5 may be directly coupled to the load and/or line voltage 3, i.e. without a gearbox and/or without a converter.

The converter 1 and/or control unit 11 may be connected to an apparatus 2, e.g. an edge device or another computing device, such as an (industrial) computer. To that end, the control unit 11 of the converter 1 may be connected to a data bus 22 via which operating data, such as actual values and/or setpoint values of the converter are transmitted. Hence, the operating data may comprise a first parameter set and/or a first parameter set may be transmitted by the converter to the computing device 2. Alternatively, the first parameter set may be retrieved by the computing device from the converter or otherwise obtained by the computing device, e.g., from a memory.

The apparatus 2 may comprise one or more software applications, i.e. one or more computer programs, e.g., for providing a virtual measurement value, for condition monitoring and/or anomaly detection, as the case may be. The one or more software applications may comprise one or more machine learning models ML and/or simulation models for processing the operating data obtained, e.g., from the converter 1 and/or control unit 11. Hence, the control unit 11 may provide operating data to the one or more software applications of the apparatus 2.

As the case may be, the apparatus 2 may serve for providing connectivity of the converter 1 with a higher-level system such as a cloud computing system, not shown, and/or the apparatus 2 may serve as an on-site computing unit for processing the operating data provided by the converter 1. It should be understood that the data bus 22 may be part of the apparatus 2 and may be coupled to the converter 1 via respective interfaces of the converter 1 and apparatus 2. The software applications may be executed on an operating system, OS, e.g. Linux, of the apparatus 2. Furthermore, the one or more software applications may be located in a cloud computing system. The operating data may also be transferred to the cloud computing system for processing by the one or more software applications, e.g. for providing a virtual measurement value, for condition monitoring and/or anomaly detection, as the case may be.

Additionally, or alternatively, e.g., in case the motor 5 is directly coupled to the line voltage 3, the apparatus 2 may be coupled to the motor and/or one or more sensors attached to the motor 5 or located in the vicinity of the motor 5. The one or more sensors may provide the operating data, e.g. comprising the first parameter set, to the apparatus and/or the software applications. That is, the one or more sensors, may provide actual values and/or setpoint values relating to the operation of the electro-mechanical system and/or the controlled process to the apparatus 2. It should be understood that the actual data may be obtained by one or more sensors, e.g. a sensor sampling a signal that is digitized and stored as a (digital) actual value. The actual values may be stored in a memory, e.g. of the converter 1 and/or apparatus 2, from where they may be retrieved by, or otherwise transmitted to, a software application, e.g., for providing a virtual measurement value, for condition monitoring and/or anomaly detection, as the case may be, and/or one or more further modules for performing the steps described herein, such as labeling, matching, and/or displaying.

Due to the abundance of converters from different vendors in the market, deploying the virtual sensing approach to drive systems comes with a plurality of problems. First, it is a cumbersome task to initialize the custom communication protocol between the converter and a software program, such as a simulation model, running on the apparatus 2, e.g., an industrial edge device. Second, especially for drive systems with third-party converters, access to all necessary operation signals and thus operating data cannot be guaranteed.

Therefore, it is desired to reduce the amount of required data from the converter and limit it to data that is conventionally accessible, in particular to data required for the virtual sensing model. Thus, is proposed to expand, e.g., by a frequency converter model, a first parameter set into a second parameter set, wherein the second parameter set comprises more parameters than the first parameter set. The second parameter set may then be used as input of a simulation of the electro-mechanical device. The simulation may then provide as a result and/or output the virtual measurement value.

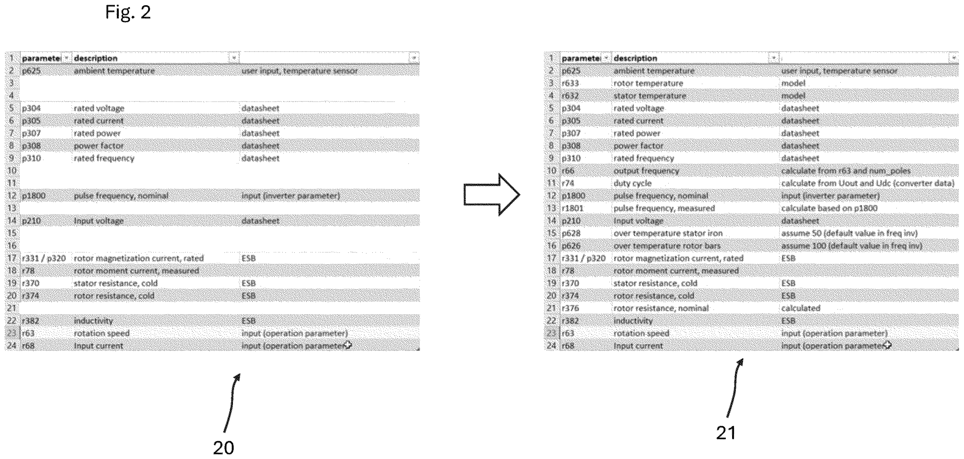

Figure 2 shows a first parameter set 20 and a second parameter set 21. Here, a first parameter 20 set may be obtained. The first parameter set 20 is then expanded into a second parameter set 21.

A virtual sensing model may require a second set of parameters 21, e.g. 25 parameters (and the corresponding values) as input for executing the simulation of the electro-mechanical system, and/or said electro-mechanical device. Now, instead of reading all of the, e.g., 25, parameters required for the simulation/ the simulation model of the electro-mechanical system from the frequency converter, a (generic) frequency converter model will read a first set of parameters 20, which are (conventionally) accessible on any frequency converter (in the market), e.g. one or more of the following: rotation speed, input current, rated motor power. The frequency converter model will then determine the second parameter set21 based at least on the first parameter set 20. Thereby, the complexity of the communication protocol may be reduced, and the parameter accessibility is guaranteed. The (generic) frequency converter model, identifies the remaining parameters and generates the full set of the 25 parameters required for the virtual sensing model. The identified parameters, i.e. the second parameter set 21, is fed or input into the virtual sensing model, which estimates, e.g., the temperatures of the internal critical components, one or more virtual measurement values.

The (generic) frequency converter model and/or the virtual sensing model may be implemented in software, e.g., on a computing device such as an edge device, and preferably is capable of inferring all or a plurality the required parameters.

The converter, such as the SINAMICS S120 proffered by Siemens, may comprise one or more closed-loop control functions in one or more control units. These units are capable of controlling the drive system in the vector, servo and V/f modes. They also perform the speed and torque control functions plus other drive functions for the one or more axes on the drive system. Basic control functions may include speed control, torque control, and/or positioning control. Further control functions may comprise starting functions for independent restart after power supply interruption, adaptation to the operating environment, integrated safety functions, and/or feedback functions for preventing undesirable reactions on the power supply, e.g., allowing recovery of braking energy and ensuring greater stability against line fluctuations.

The drive system's components, e.g., including the motor and encoder, are connected to each other, for example via a serial interface. The, preferably standardized, cables and connectors reduce the variety of different parts and cut storage costs. For third-party motors or retrofit applications conversion of the signaling between the components is available.

The ESB is the equivalent circuit diagram, also known as Ersatzschaltbild. An important digital linkage element of the power supply, such as a converter, e.g., SINAMICS S120, are the electronic type plates, which may for example be integrated in every component. They allow all drive components to be detected automatically, e.g., via a DRIVE-CLiQ link. As a result, data does not have to be entered manually during commissioning or component replacement - helping to ensure that drives are commissioned more reliably. The rating plate may contain all the relevant technical data about that particular component. For motors, these are the parameters of the electrical equivalent circuit diagram, ESB, and key values of the integrated motor encoder.

In addition to the technical data, the type plate includes logistical data (manufacturer ID, article number and ID). Since this data can be called up electronically on site or remotely, all the components used in a machine can always be individually identified, which helps simplify servicing. Thus, the first parameter set may comprise the parameters comprised in an electronic plate such as the rating plate or type plate.

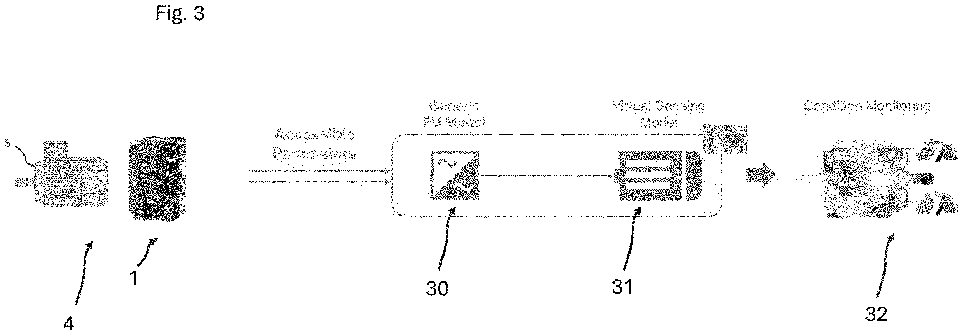

Figure 3 shows an illustration of a drive system with virtual sensing capabilities. As shown, at first, a first parameter set, i.e., said accessible parameters, is obtained by the (generic) converter model 30. The (generic) converter model 30 expands this first parameter set 20 into a second parameter set 21. The second parameter set may be stored or directly provided to the virtual sensing model 31. The virtual sensing model 31 may determine the one or more virtual measurement values of the electro-mechanical device 1 or 5 or system 4. The virtual measurement value may relate to a physical property, e.g. a temperature, at a predetermined location in or on the electro-mechanical device 1 or 5, e.g., in or on a winding, bearing and/or rotor of the electro-mechanical device, such a motor 5. The one or more virtual measurement values may then be used for condition monitoring and/or predictive maintenance, e.g. by a condition monitoring and/or condition monitoring application 32. For example, the one or more virtual measurement values may be used by a condition monitoring application 23 to classify and/or predict a health state of the electro-mechanical device, such a converter 1 and/or motor 5, and/or the electro-mechanical system 4. Additionally, or alternatively, the one or more virtual measurement values may then be used for controlling the operation of the electro-mechanical device, such as motor 5, the converter 1 and/or the (overall) electro-mechanical system. That is, one or more control parameters of the electro-mechanical device, such as motor 5, the converter 1 and/or the (overall) electro-mechanical system may be adapted based on the one or more virtual measurement values.

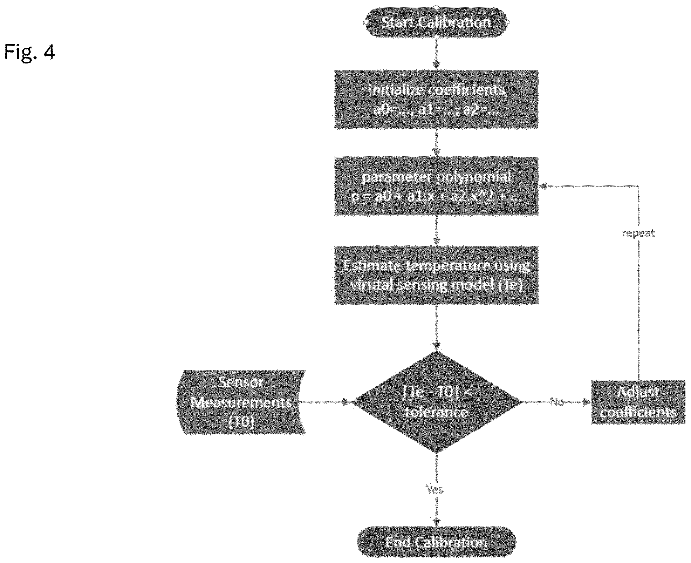

Figure 4 shows a flowchart for calibration of the frequency converter model and/or the simulation model of the electro-mechanical device. A calibrated frequency converter model may precisely approximate the unmeasured frequency converter parameters, hence, yielding precise input to the virtual sensing model, and accordingly temperature estimates comparable to that of the actual physical sensor (either mounted, internally provided, or e.g. infrared temperature sensor) may be obtained. It should be understood, that said electro-mechanical device may be part of the electro-mechanical system. In turn the teachings herein apply not only to the electro-mechanical device but also to the (overall) electro-mechanical system.

As shown, a calibration algorithm may be triggered, e.g., at the start of a calibration or initial start-up of the electro-mechanical device 1 and/or 5. To that end, one or more accessible parameters, i.e., a first parameter set, are obtained from the frequency converter 1. Additionally, one or more actual measurement values T0 are obtained from a physical sensor attached to the electro-mechanical device. The sensor may be an externally mounted sensor on the housing of the motor, or an internal sensor mounted by the motor manufacturer during assembly.

Now, at the start of the calibration, e.g., at the start of a calibration phase, the remaining one or more parameters which are required by the virtual sensing model (to be carried out) are modelled/described by a (generic) frequency converter model. The frequency converter model may comprise one or more polynomial functions. Therein, the one or more unknown parameters may be modelled by the one or more polynomial functions. Hence, by using one or more polynomial functions with unknown coefficients the second parameter set may be determined.

Using, for example a (sparse) regression, the calibration (algorithm) determines the coefficients of the one or more polynomials, such that the final outcome from the virtual sensing model (i.e. the virtual measurement value representing for example the temperature at the position of the physical sensor) is acceptably close to the actual sensor measurements.

As shown, in Figure 4 the coefficients of the one or more polynomials may at first be initialized, e.g., based on preconfigured coefficient values a0, a1, a2,..., respectively, e.g., from past experience, or based on the values of the first parameter set, or even put to zero or initialized with a random values or otherwise robust values. The resulting one or more polynomials are then used to determine the unknown parameters (or parameter values) of the second parameter set. The second parameter set may then be used as input for the virtual sensing model that estimates the temperature (or other physical property of the electro-mechanical system). The virtual sensing model may thus output one or more virtual measurement values Te. These one or more virtual measurement values Te are compared to the one or more actual measurement values T0. If the deviation between the actual measurement value and the virtual measurement value is below a tolerance the calibration may end and the values of the coefficients may be used for the (generic) frequency converter model. Otherwise, if the deviation between the actual measurement value and the virtual measurement value exceeds the tolerance, the coefficients of the one or more polynomials are adjusted. Thereupon the resulting second parameter set is again fed into the virtual sensing model and the resulting virtual measurement value is again compared to the actual measurement value. This process may be repeated until the deviation is below the tolerance, or does not exceed the tolerance. The calibration of the (generic) frequency converter model may then end and the coefficients last used (that led to the deviation being below the tolerance) may be used for the (generic) frequency converter model, e.g. during the productive phase.

After the calibration phase is concluded, the physical sensor (external or infrared sensor) for obtaining the actual measurement values may no longer be needed and may be removed. The calibrated frequency converter model may then be used to determine or estimate the remaining unread parameters, i.e. expand the first parameter set into the second parameter set, and supply the virtual sensor model with a complete parameter inputs, i.e. eh second parameter set.

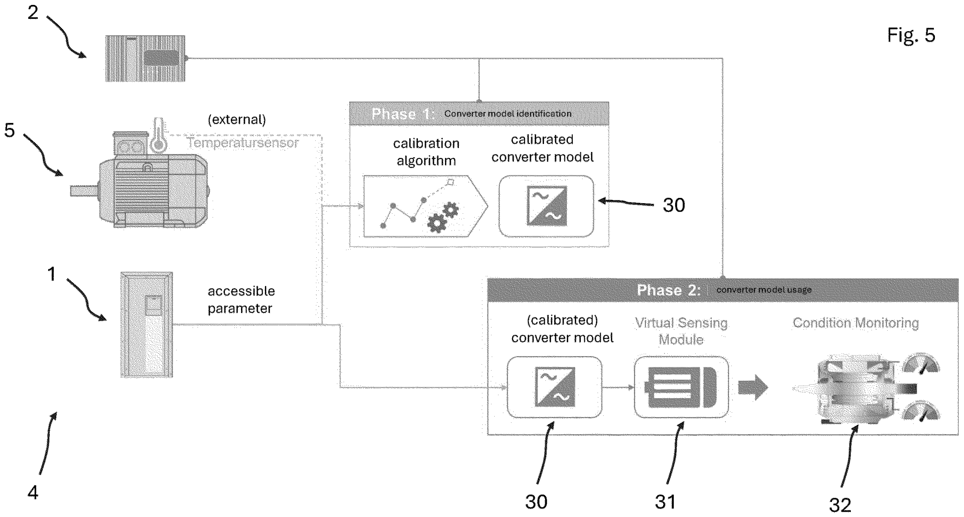

Figure 5 shows an illustration of the calibration phase, Phase 1, and utilization phase, Phase 2, of the frequency converter model and/or the simulation model in a drive system with virtual sensing capabilities. It should be understood that the teachings here apply to a drive system as well as a electro-mechanical system, or more specifically to an electro-mechanical device.

A computing device 2 such as an industrial edge device, e.g., proffered by Siemens, may serve for carrying out the calibration and productive use of the frequency converter model. During a first phase, Phase 1, a calibration of the frequency converter model 30 may be carried out as described herein. The calibration may comprise a calibration algorithm such as a (sparse) regression in order to arrive at a calibrated frequency converter model. The calibrated frequency converter model or simply frequency converter model 30 may then be used during a second phase, Phase 2, for determining the missing parameter values for executing the virtual sensing model 31.

As described herein, during the calibration phase actual measurement values may be obtained from a sensor, such as (external) sensor as shown in Figure 5. The sensor may be removed after the calibration phase. In any case, the sensor readings may no longer be required after the calibration phase. Thus, for example (part of) the sensor may remain attached to the electro-mechanical device but the sensor signals are no longer processed. Furthermore, still during the calibration phase, one or more (accessible) parameters, e.g. 2 to 5 parameters, may be obtained from the frequency converter 1. This first parameter set may be used also during the calibration phase, e.g., for initializing the (coefficients of a) frequency converter model 30.

The calibrated frequency converter model 30 may then be used during productive phase, i.e. during the operation of the frequency converter 1 and/or electro-mechanical system 4 or device 5. Based on the frequency converter model 30 the simulation of the electro-mechanical device may be performed to arrive at one or more virtual measurement values. The one or more virtual measurement values may be used for condition monitoring and/or fault prediction of the electro-mechanical device, e.g. by said application 32. Furthermore, the one or more virtual measuremnt values may be used as described herein for controlling the operation of the convert, electro-mechanical device such as motor 5 and/or the electromechanical system and even the application the electro-mechanical system is used in. For example, the application of the electro-mechanical system may be a pump, not shown, and thus a valve may be controlled, e.g., control command for opening and/or closing the valve may be issued, in order to control a fluid flow.

The disclosure herein enables to determine virtual measurement values of a third-party electro-mechanical device, e.g., an electrical motor or generator. Furthermore, it is possible to make use of the frequency converter model to determine the missing parameters that may not be available from the converter in order to execute a simulation, e.g., based on a virtual sensing model (also of third partys), for determining one or more virtual measurement values. As the case may be the virtual measurement values may relate to different locations on or within the electro-mechanical device and/or may relate to different points in time and/or may relate to different operating conditions of the electro-mechanical device.

It is thus proposed to include a frequency converter model, e.g., in addition to the virtual sensing model. The proposed solution enables a compatibility between many frequency converters and condition monitoring and/or fault prediction applications, and in particular is independent of the data access and privacy configurations and comprises less setup/calibration effort.

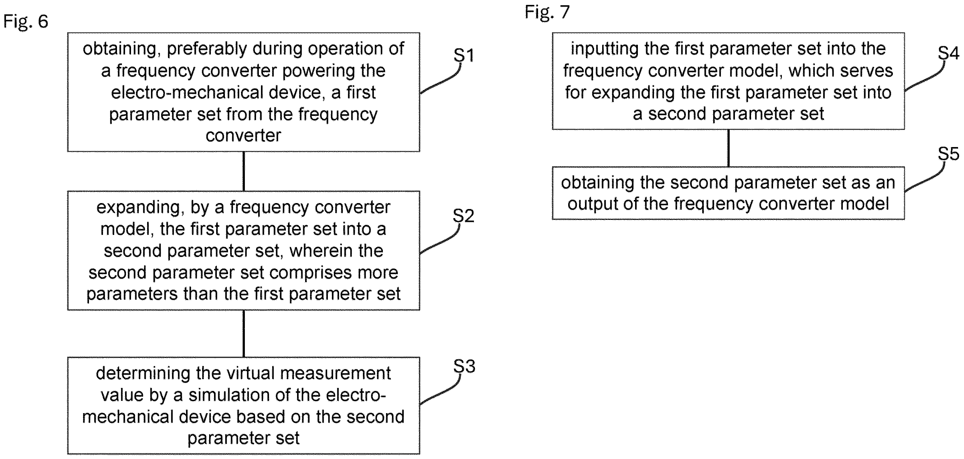

Figure 6 to 13 show further exemplary embodiments. Among others, the embodiments relate to method steps and the corresponding functions implemented in software and/or a computer program which may be example carried out by and/or deployed on a computing device, or even a converter itself. The embodiments may serve for providing a virtual measurement value of an electro-mechanical device.

Turning to Figure 6, in a first step S1, preferably during operation of a frequency converter powering the electro-mechanical device, a first parameter set is obtained, e.g., by a frequency converter model, from the frequency converter. It should be understood that, the first parameter set may be stored after being obtained from the converter and only later may be obtained, e.g., by a software application or computer program for processing. The first parameter set may comprise at least one parameter relating to the operation of the converter and/or the electro-mechanical device or the electro-mechanical system. The first parameter set may be available from a memory of the converter. In a second set S2, the first parameter set may be expanded into a second parameter set, e.g., by a frequency converter model, wherein the second parameter set comprises more parameters than the first parameter set. Hitherto, further parameters (and respective parameter values) may be added or appended to the first parameter set. The frequency converter model may be a software application or computer program that serves for expanding the first parameter set, that is determines the further parameters in addition to the first parameter set and/or based on the first parameter set. Thus, the software application or computer program models the converter and provides further parameters, that for example are not (directly) available from the converter and/or are needed for a simulation or as input for a simulation of the electro-mechanical device. This may be due to unknown parameter names or commands for retrieving these parameters from the converter and/or due to proprietary communication protocol of the converter. Or, it may simply be a certain vendor simply does not offer the parameter to be retrieved from the converter. Thus, the second parameter set may comprise these further or missing parameters in addition to the first parameter set. In any case the situation may appear that the second parameter set does not explicitly comprise the first parameter set but only comprises further parameters that are derived from the first parameter set. In a third step S3, the virtual measurement value is determined by a simulation of the electro-mechanical device based on the second parameter set. Thus, for the simulation to be carried out at least on the second parameter set is necessary. Hithereto, the second parameter set is input in the simulation (model), also referred to as virtual sensing model. As a result, the simulation may return the virtual measurement value, which, e.g., may be output to a user or to a further software application for further processing. Based on the virtual measurement value an alert, e.g., an alarm and/or notification may be issued, e.g. to a user or to another software application or computer program. The alert may be used to control the operation of the electro-mechanical device. For example, the operating mode of the electro-mechanical device may be changed. For example, a shutdown or safe-operation of the electro-mechanical device may be performed.

Now turning to Figure 7, in a step S4, the first parameter set is input into the frequency converter model, which serves for expanding the first parameter set into a second parameter set. Based on the input a second parameter set may be determined. As described herein the second parameter set comprises the one or more parameters necessary for carrying out the simulation of the electro-mechanical device. Since not all of those parameters may be present or provided by the converter it is necessary to determine, or estimate, additional parameters not already comprised in the first parameter set. Thus, in a step S5, the second parameter set is obtained as an output of the frequency converter model. As disclosed herein the second parameter set may comprise additional parameters and may thus comprise more parameters than the first parameter set. In any case, the second parameter set may comprise other parameters than the first parameter set, i.e. may not (explicitly) include the parameters of the first parameter set. Furthermore, the case may appear that the parameters determined and/or output by the frequency converter model may be added to or appended to the first parameter set only after being determined or output by the frequency converter model.

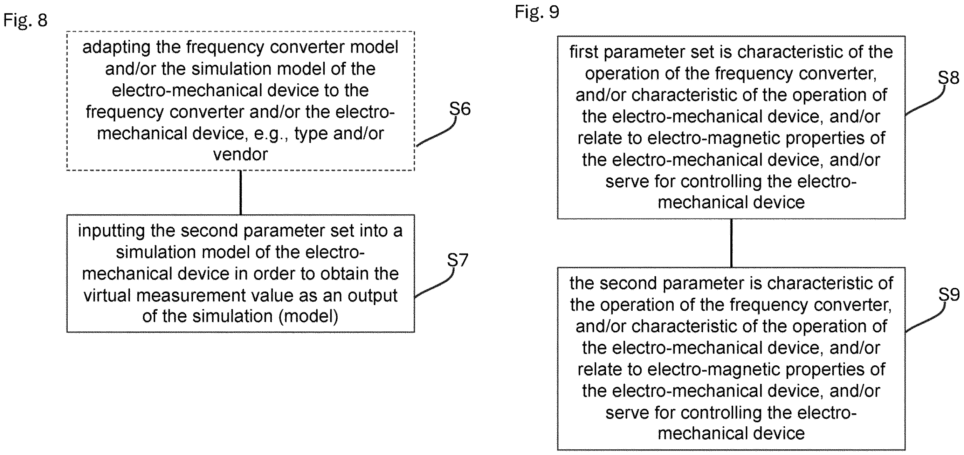

Turning to Figure 8, in a step S8, the frequency converter model and/or the simulation model of the electro-mechanical device may be adapted or may be adaptable to the frequency converter and/or the electro-mechanical device, e.g., adapted or adaptable to the type and/or vendor of the frequency converter and/or the electro-mechanical device. As described herein, it may be necessary to determine parameters that may not easily be obtained from the converter itself and which may thus be derived or learned somehow at first, e.g., by way of a calibration of the frequency converter model. Alternatively, or additionally, the simulation model of the electro-mechanical device may require input parameters that are not provide by the frequency converter and which thus also have to be determined. Thus, the specific parameters that are output by the frequency converter model may need to be adapted as well. In a step S7, the second parameter set may then be input into a simulation model of the electro-mechanical device in order to obtain the virtual measurement value as an output of the simulation (model).

Turning to Figure 9, the first parameter set (which is obtained from the frequency converter and/or input into the frequency converter model) is most preferably characteristic of the operation of the frequency converter, and/or preferably characteristic of the operation of the electro-mechanical device, and/or relates to electro-magnetic properties of the electro-mechanical device, and/or serve for controlling the electro-mechanical device. Exemplary parameters of the first parameter set are provided on the left-hand side in Figure 2. As mentioned, parameters comprising one or more of the following are conventionally available from the converter: rotation speed, input current, rated motor power. The second parameter is characteristic of the operation of the frequency converter, and/or characteristic of the operation of the electro-mechanical device, and/or most preferably relate to electro-magnetic properties of the electro-mechanical device, and/or serve for controlling the electro-mechanical device. Exemplary parameters of the second parameter set are provided on the right-hand side of Figure 2.

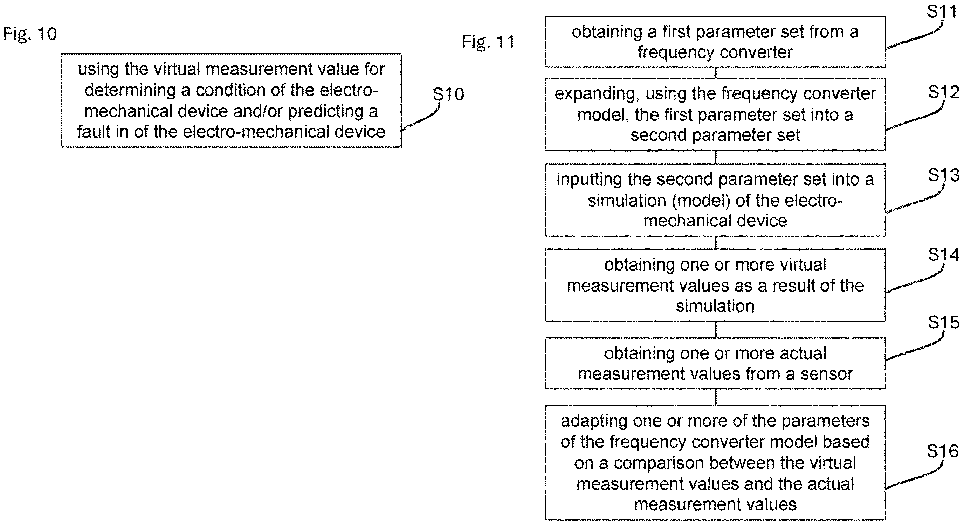

Turning to Figure 10, in a step S10 the virtual measurement value is used for determining a condition of the electro-mechanical device and/or predicting a fault in of the electro-mechanical device. Of course the virtual measurement value can be used for other purposes as well and may be output or provided to another software application or computer program. A condition of the electro-mechanical device may be determined by categorizing the virtual measurement value into one or more categorize corresponding to different operating states of the electro-mechanical device such as idle, nominal, ramp-up and/or ramp down or the like. Furthermore, the virtual measurement value may be used as a reference value for an actual measurement value, e.g. of a sensor. A deviation may be determined in order to monitor the condition of the sensor itself (instead of the condition of the overall electro-mechanical device or system).

Turning to Figure 11, the calibration of the frequency converter model is described in an embodiment. In a step S11 a first parameter set is obtained from a frequency converter. In a step S12 the first parameter set is expanded into a second parameter set. In a step S13, the second parameter set is input into a simulation (model) of the electro-mechanical device. In a step S14, one or more virtual measurement values are obtained as a result of the simulation. In a step S15, one or more actual measurement values are obtained from a sensor. And, in a step S15, one or more of the parameters of the frequency converter model are adapted based on a comparison between the virtual measurement values and the actual measurement values. However, the calibration may end in case a tolerance (between the actual and the virtual measurement value) is already met. If not, the expansion of the first parameter set according to step S12 is repeated with adapted parameters of the frequency converter model, e.g., with adapted coefficients in case of a polynomial function.

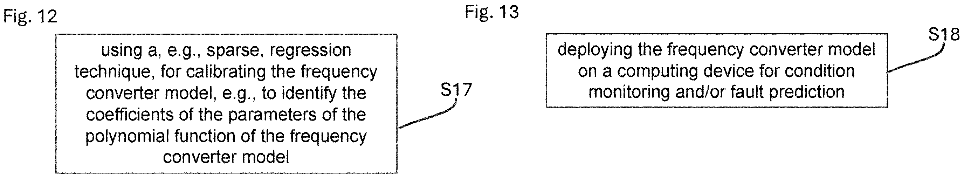

Turning to Figure 12, in a step S17, a, e.g., sparse, regression technique is used for calibrating the frequency converter model, e.g., to identify the coefficients of the parameters of the one or more polynomial functions of the frequency converter model.

Turning to Figure 13, in a step S18, the (calibrated) frequency converter model may be deployed on a computing device for condition monitoring and/or fault prediction of the electro-mechanical device. As already mentioned, frequency converter model, the simulation model of electro-mechanical device, and/or the one or more virtual measurement values may be used for condition monitoring, predictive maintenance and/or fault prediction of the electro-mechanical device. Furthermore, the one or more virtual measurement values may then be used for controlling the operation of the electro-mechanical device, such as motor 5, the converter 1 and/or the (overall) electro-mechanical system. That is, one or more control parameters of the electro-mechanical device, such as motor 5, the converter 1 and/or the (overall) electro-mechanical system may be adapted based on the one or more virtual measurement values.

## Claims

1. A, preferably computer-implemented, method of providing a virtual measurement value of an electro-mechanical device (5), such as a motor, comprising:
obtaining, preferably during operation of a frequency converter (1) powering the electro-mechanical device (5), a first parameter set from the frequency converter, expanding, by a frequency converter model, the first parameter set (20) into a second parameter set (21), wherein the second parameter set (21) comprises more parameters than the first parameter set (20), and
determining the virtual measurement value by a simulation of the electro-mechanical device (5) based on the second parameter set (21).

2. The method according to the preceding claim, further comprising the step:
inputting the first parameter set (20) into the frequency converter model (30), which serves for expanding the first parameter set (20) into a second parameter set (21), wherein the second parameter set (21) comprises more parameters than the first parameter set (20).

3. The method according to any one of the preceding claims,
further comprising the step:
obtaining the second parameter set (21) as an output of the frequency converter model (30).

4. The method according to any one of the preceding claims,
further comprising the step:
inputting the second parameter set (21) into a simulation model (31) of the electro-mechanical device (5) in order to obtain the virtual measurement value as an output of the simulation (31), e.g. carried out by the simulation model (31).

5. The method according to any one of the preceding claims,
the frequency converter model (30) and/or the simulation model (31) of the electro-mechanical device (5) are adapted/adaptable to the frequency converter (1) and/or the electro-mechanical device (5), e.g., type and/or vendor.

6. The method according to any one of the preceding claims,
wherein one or more parameters of the first parameter set (20) are characteristic of the operation of the frequency converter (1), and/or characteristic of the operation of the electro-mechanical device (5), and/or relate to electro-magnetic properties of the electro-mechanical device (5), and/or serve for controlling the electro-mechanical device (5).

7. The method according to any one of the preceding claims,
wherein the second parameter set (21) comprises more parameters than the first parameter set (20) that are characteristic of the operation of the frequency converter (1), and/or characteristic of the operation of the electro-mechanical device (5), and/or relate to electro-magnetic properties of the electro-mechanical device (5), and/or serve for controlling the electro-mechanical device (5).

8. The method according to any one of the preceding claims,
wherein the first parameter set (20) comprises one or more of the following: a rotation speed (setpoint), an input current (setpoint), an input voltage (setpoint), a torque (setpoint), and/or a power (setpoint) of the electro-mechanical device (5).

9. The method according to any one of the preceding claims,
wherein the second parameter set (21) comprises and/or is indicative of one or more of the following: electrical resistance, inductance, and/or capacitance of the electro-mechanical device, e.g. of one or more component of the electro-mechanical device (5).

10. The method according to any one of the preceding claims,
the virtual measurement value relating to a physical property, e.g. a temperature, at a predetermined location in or on the electro-mechanical device (5), e.g., in or on a winding, bearing and/or rotor of the electro-mechanical device (5).

11. A method of condition monitoring and/or fault prediction, of an electro-mechanical device (5), preferably of one or more components of the electro-mechanical device (5), comprising the method steps of any one of the previous claims, further comprising:
using the virtual measurement value for determining a condition of the electro-mechanical device (5) and/or predicting a fault in of the electro-mechanical device (5).

12. A method of generating, preferably calibrating, a frequency converter model (30) comprising one or more parameters, the method comprising the steps of:
obtaining a first parameter set from a frequency converter,
expanding, using the frequency converter model (30), the first parameter set (20) into a second parameter set (21),
inputting the second parameter set (21) into a simulation, preferably into a simulation model (31), of the electro-mechanical device (5),
obtaining one or more virtual measurement values as a result of the simulation, e.g., as an output of the simulation model (31),
obtaining one or more actual measurement values from a sensor, e.g., mounted on the electro-mechanical device (5),
adapting one or more of the parameters of the frequency converter model (30) based on a comparison between the virtual measurement values and the actual measurement values,
preferably until a deviation between the actual and the virtual measurement values exceeds a predetermined threshold.

13. The method according to the preceding claim, wherein the frequency converter model (30) is provided by a polynomial function, e.g., comprising one or more independent variables, wherein the parameters of the frequency converter model (30) are provided by the variables and/or coefficients of the polynomial function.

14. The method according to any one of the preceding claims 12-13, the method comprising the steps of:
using a, e.g., sparse, regression technique, for calibrating the frequency converter model (30), e.g., to identify the coefficients of the parameters of the polynomial function of the frequency converter model (30).

15. The method according to any one of the preceding claims 12-13, the method comprising the steps of:
deploying the frequency converter model (30) on a computing device for condition monitoring and/or fault prediction.

16. A computing device (2), preferably comprising a processor and a memory, for condition monitoring and/or fault prediction operative to perform the method steps of claims 1-10, claim 11 and/or claims 12-15.

17. A system (4) comprising a computing device (2) according to the preceding claim, a frequency converter (1) and an electro-mechanical device (5).

18. A computer program, e.g., stored on a non-transitory memory, comprising program code that when executed perform the method steps of claims 1-10, claim 11 and/or claims 12-15.
